# EUROPÄISCHE PATENTSCHRIFT

(11) **EP 1 244 566 B1**
(45) Veröffentlichungstag und Bekanntmachung des Hinweises auf die Patenterteilung: **31.05.2006**
(21) Anmeldenummer: 00990522.5
(22) Anmeldetag: 09.12.2000
(51) Int. Cl.: B60N 2/16

(54) **VORRICHTUNG ZUM VERSTELLEN DER NEIGUNG EINER SITZPLATTE EINES FAHRZEUGSITZES**
DEVICE FOR ADJUSTING THE INCLINATION OF A SEAT SURFACE PART OF A VEHICLE SEAT
DISPOSITIF POUR MODIFIER L'INCLINAISON DE LA PARTIE D'ASSISE D'UN SIEGE DE VEHICULE

(30) Priorität: 15.12.1999 DE 19960396
(43) Veröffentlichungstag der Anmeldung: 02.10.2002
(73) Patentinhaber: GRAMMER AG, 92224 Amberg (DE)
(72) Erfinder: FRETSCHNER, Hans-Dieter, 92439 Bodenwöhr (DE); GRAF, Stefan, 92507 Nabburg (DE); OTT, Richard, 92245 Kümmersbruck (DE); RAUM, Holger, 92237 Sulzbach-Rosenberg (DE)
(74) Vertreter: Pöhlau, Claus
(86) Internationale Anmeldenummer: PCT/DE2000/004407
(87) Internationale Veröffentlichungsnummer: WO 2001/044008

(56) Entgegenhaltungen:
- DE-A- 4 135 092
- FR-A- 2 529 145
- US-A- 3 695 570
- US-A- 3 910 543

## Beschreibung

Die Erfindung betrifft eine Vorrichtung zum Verstellen der Neigung einer Sitzplatte eines Fahrzeugsitzes.

Eine derartige Vorrichtung ist aus der FR 2 529 145 A, US 3 910 543 A oder der DE 30 22 950 oder der A bekannt. Bei dem Fahrzeugsitz handelt es sich insbesondere um einen LKW-Sitz, einen Traktorsitz, einen Staplersitz, oder um einen Sitz für eine Baumaschine.

Bei der FR 2 529 145 A wird die Neigung der Sitzplatte z.B. durch Anheben oder Absenken ihrer Vorderseite bzw. durch Anheben oder Absenken ihrer Hinterseite erreicht. Dabei wird jeweils einer von zwei linear beweglich geführten Zahnschiebern durch ein zwischen den beiden Zahnschiebern drehbar gelagertes Sperrglied von einer Sperrstellung in eine Freigabe- und Verstellposition bewegt. Die Verzahnung der Sperrschieber wirkt in dieser Vorrichtung mit der Verzahnung zweier korrespondierender Verstellklinken zusammen, mittels derer die Neigung der Sitzplatte eingestellt wird. Das Sperrglied wird dabei zum Anheben oder Absenken der Vorderseite bzw. der Hinterseite der Sitzplatte in jeweils eine von zwei Richtungen gedreht und dabei nach dem Loslassen des Sperrgliedes von einem vorgespannten Federelement in seine Ausgangslage gebracht, wobei auch jeder der beiden Zahnschieber selbsthemmend in Sperrstellung gezwängt wird.

Üblicherweise sind solche Verstellvorrichtungen der eingangs genannten Art integrale Bestandteile des jeweiligen Fahrzeugsitzes, d.h. sie werden bei der Produktion des entsprechenden Fahrzeugsitzes in diesen integriert.

Der Erfindung liegt die Aufgabe zugrunde, eine Verstellvorrichtung der eingangs genannten Art zu schaffen, die auch zum nachträglichen Einbau, d.h. zur nachträglichen Kombination mit einem Fahrzeugsitz geeignet ist, und die bei einem relativ einfachen konstruktiven Aufbau nur einen kleinen Abmessungsbedarf in Höhenrichtung des Fahrzeugsitzes besitzt.

Diese Aufgabe wird bei einer Vorrichtung der eingangs genannten Art erfindungsgemäß dadurch gelöst, daß eine Wippe mit einem oberen und einem unteren Wippenelement vorgesehen ist, die durch seitliche Lagerbuchsen miteinander schwenkbeweglich verbunden sind, daß an dem oberen Wippenelement eine Zahnbrücke mit sich gegenüberliegenden und zu den Lagerbuchsen konzentrischen Brückenzahnungen fixiert ist, und daß zwischen den beiden Brückenzahnungen der Zahnbrücke zwei Zahnschieber mit voneinander abgewandten Schieberzahnungen und zwischen den beiden Zahnschiebem ein Sperrglied vorgesehen ist, das um eine sich durch die Lagerbuchsen erstreckende Drehachse drehbar ist, wobei die beiden Zahnschieber am unteren Wippenelement zwischen einer in die Brückenzahnungen einrastenden Sperrstellung und einer von den Brückenzahnungen beabstandeten Freigabe- und Verstellposition linear beweglich geführt sind, das Sperrglied zum Verstellen der beiden Zahnschieber zwischen der Freigabe- und Verstellposition und der Sperrstellung vorgesehen ist, und zwischen der Drehachse und dem unteren Wippenelement ein vorgespanntes Federelement vorgesehen ist, das die beiden Zahnschieber selbsthemmend in die Sperrstellung zwängt.

Die Wippe der erfindungsgemäßen Verstellvorrichtung mit dem oberen und dem unteren Wippenelement weist in vorteilhafter Weise nur eine kleine Bauhöhe auf, so daß die Wippe problemlos zwischen der Sitzplatte eines Fahrzeugsitzes und einer bei solchen Fahrzeugsitzen üblichen Sitzfederungseinrichtung vorgesehen werden kann. Die erfindungsgemäße Einrichtung beeinflußt infolge ihrer geringen Bauhöhe die Gesamthöhe des entsprechenden Fahrzeugsitzes kaum bzw. nur unmerklich. Mit Hilfe der erfindungsgemäßen Verstellvorrichtung kann die Sitzplatte eines Fahrzeugsitzes beispielsweise um größenordnungsmäßig ± 12 Winkelgrad relativ zur Waagrechten in kleinen Winkelschritten verstellt werden. Dabei handelt es sich zweckmäßigerweise um eine Verstellung um eine durch die Drehachse bestimmte Sitzquerachse. Durch geeignete Adapterkomponenten ist auch eine Sitzneigung quer zur Fahrtrichtung, d.h. um eine Sitzlängsachse, realisierbar.

Als zweckmäßig hat es sich erwiesen, wenn das obere und das untere Wippenelement als Blechteile ausgebildet sind. Bei diesen Blechteilen kann es sich um Tiefzieh- bzw. Prägeteile handeln, die einfach und preisgünstig herstellbar sind.

Eine konstruktiv einfache und sehr zuverlässige Fixierung der Zahnbrücke am oberen Wippenelement ergibt sich, wenn die Zahnbrücke am oberen Wippenelement durch Zentrierzapfen zentriert und mittels davon beabstandeter Befestigungselementen fixiert ist. Bei diesen Befestigungselementen kann es sich um Befestigungsschrauben oder vorzugsweise um Nieten handeln. Durch die von den Befestigungselementen beabstandeten Zentrierzapfen, die in zugehörige Löcher im oberen Wippenelement spielfrei hineinstehen, werden die jeweiligen Kräfte zuverlässig von der Sitzplatte des Fahrzeugsitzes zum oberen Wippenelement und somit zur Wippe übertragen.

Um beim wunschgemäßen Verstellen der Neigung der Sitzplatte des Fahrzeugsitzes ein sog. "gleitendes Ratschen" zu ermöglichen, ist es zweckmäßig, wenn die Brückenzahnungen der Zahnbrücke und die Schieberzahnungen der Zahnschieber wellenförmige Zahnprofile aufweisen.

Als vorteilhaft hat es sich erwiesen, wenn bei der erfindungsgemäßen Verstellvorrichtung jeder der beiden Zahnschieber einen dem Sperrglied zugewandten Rücken und wenn das Sperrglied mit diametral gegenüberliegenden, an den Rücken anliegenden Nasen ausgebildet ist. Die Nasen des Sperrgliedes und die Rücken der Zahnschieber sind vorzugsweise derartig gestaltet, daß mit Hilfe des zwischen der Drehachse und dem unteren Wippenelement vorgesehenen mechanisch vorgespannten Federelement ein Nachstellen der Zahnschieber ermöglicht wird, so daß auch nach einer langen Betriebsdauer der erfindungsgemäßen Verstelleinrichtung ein eventuell auftretendes Spiel zwischen den Brückenzahnungen der Zahnbrücke und den Schieberzahnungen der Zahnschieber eliminiert bzw. zumindest reduziert wird.

Zweckmäßig ist es, wenn das untere Wippenelement mit Führungsschlitzen ausgebildet ist, die miteinander in einer Linie fluchten, und wenn die beiden Zahnschieber zu ihrer Verstellung zwischen der Sperrstellung und der Freigabe- und Verstellposition mit Führungsstegen ausgebildet sind, die in den Führungsschlitzen linear beweglich geführt sind.

Derartige Führungsschlitze sind im unteren Wippenelement einfach und sehr präzise ausbildbar. Die Führungsstege sind zweckmäßigerweise integrale Bestandteile der Zahnschieber. Auf diese Weise ergibt sich eine exakte und robuste Ausbildung ausgezeichneter Betriebszuverlässigkeit.

Besonders vorteilhaft ist es, wenn die Rücken der Zahnschieber und die Nasen des Sperrgliedes derartig ausgebildet sind, daß die Nasen in der Sperrstellung der Zahnschieber in einer geraden Wirklinie liegen, die sich durch die Drehachse der Wippe erstreckt und die zu den Führungsschlitzen parallel verläuft oder zu diesen deckungsgleich vorgesehen ist. Hierdurch wird in vorteilhafter Weise vermieden, daß durch das obere Wippenelement der Wippe in die Zahnbrücke eingeleitete äußere mechanische Kräfte, die über die Brückenzahnungen eine Kraftkomponente auf die Schieberzahnungen der Zahnschieber ausüben, die Zahnschieber aus der Sperrstellung herauszwängen. Durch die besagte Positionierung der Zahnschieber in der geraden Wirklinie wird eine zuverlässige Hemmung der Zahnschieber in der Sperrstellung bewirkt.

Bei der erfindungsgemäßen Verstellvorrichtung kann von jedem der beiden Zahnschieber jeweils ein Zapfen wegstehen, und kann das Sperrglied mit sich diametral gegenüberliegenden Kulissen ausgebildet sein, mittels welchen die beiden Zahnschieber bei einer Freigabeverstellung des Sperrgliedes durch die Zapfen gegen die Kraft des Federelementes von der Sperrstellung in die Freigabe- und Verstellposition verstellbar sind.

Die Zapfen sind zweckmäßigerweise integraler Bestandteile der Zahnschieber. Die Kulissen des Sperrgliedes können als Kulissenschlitze ausgebildet sein.

Bei der erfindungsgemäßen Verstelleinrichtung weist die Drehachse einen von der Kreisform abweichenden Querschnitt auf. Hierbei kann es sich um einen viereckigen bzw. quadratischen Querschnitt handeln. Das Sperrglied der erfindungsgemäßen Sperreinrichtung kann ein Durchgangsloch aufweisen, dessen lichter Querschnitt an den Querschnitt der Drehachse angepaßt ist. Kommt die erfindungsgemäße Verstellvorrichtung jedoch nicht nur an einer Seite des jeweiligen Fahrzeugsitzes zur Anwendung, sondern an beiden Seiten, so können die beiden Sperrglieder mittels einer gemeinsamen Drehachse betätigt werden. Unter bestimmten Voraussetzungen, wie einer möglichen Verwindung der Wippe durch große äußere Kräfte, kann es zu einem ungleichmäßigen Einrasten der Zahnschieber auf der einen und auf der anderen Seite des Fahrzeugsitzes kommen. Eine starre Verbindung der Sperrglieder kann unter Umständen zu einem "Darüberrasten" über die vom Sitzbenutzer gewünschte Neigungsposition des Fahrzeugsitzes führen. Um ein solches "Darüberrasten" zu vermeiden, kann das Sperrglied ein Durchgangsloch aufweisen, dessen lichter Querschnitt an den Querschnitt der Drehachse derartig angepaßt ist, daß eine begrenzte Winkeldrehbewegung der Drehachse relativ zum Sperrglied möglich ist. Eine derartige Ausbildung der zuletzt genannten Art weist den Vorteil auf, daß die durch die begrenzte Winkeldrehbewegung einzeln gefederten Sperrglieder in Auslöserichtung miteinander verschwenkbar sind, bei einer nicht realisierten Sperrstellung auf einer der beiden Seiten des Fahrzeugsitzes jedoch unabhängig voneinander ihre Sperrstellung einnehmen können.

Die erfindungsgemäße, aus wenigen Einzelteilen bestehende Verstellvorrichtung ist in vorteilhafter Weise einfach herstellbar bzw. zusammenbaubar, sie weist bei einer einfachen und robusten Ausbildung eine ausgezeichnete Betriebszuverlässigkeit auf. Ein weiterer wesentlicher Vorteil besteht darin, daß ihr Winkel- bzw. Neigungs-Verstellbereich bei einer geringen Gesamtbauhöhe groß ist.

Verstellvorrichtungen für eine in ihrer Neigung verstellbare Rückenlehne eines Fahrzeugsitzes sind beispielsweise aus der DE 35 40 726 C2, aus der DE 38 10 612 C2, aus der US 5 918 714, aus der EP 0 720 930 A1 oder aus der DE 198 16 248 C1 bekannt. Alle diese bekannten Verstellvorrichtungen für die Rückenlehne eines Fahrzeugsitzes weisen bei einer kreisrunden Grundkonstruktion einen relativ großen Platz- bzw. Grundflächenbedarf auf. Nachdem eine solche bekannte Verstellvorrichtung zwischen der Rückenlehne und der Sitzplatte eines Fahrzeugsitzes vorgesehen ist, ist dieser Grundflächenbedarf nicht besonders relevant, er wirkt sich auf die Gesamthöhe des Fahrzeugsitzes in keiner Weise aus.

Weitere Einzelheiten, Merkmale und Vorteile ergeben sich aus der nachfolgenden Beschreibung eines in der Zeichnung dargestellten Ausführungsbeispieles der Verstelleinrichtung zum Verstellen der Neigung einer Sitzplatte eines Fahrzeugsitzes.

Es zeigen:
- Figur 1: eine Seitenansicht eines auf einer Sitzfederung vorgesehenen Fahrzeugsitzes mit einer Verstellvorrichtung zum Verstellen der Neigung der Sitzplatte des Fahrzeugsitzes relativ zur Sitzfederungseinrichtung,
- Figur 2: eine schematische Seitenansicht der Neigungsverstellvorrichtung gemäß Figur 1,
- Figur 3: eine Seitenansicht einer Ausführungsform der Verstellvorrichtung in einer waagrechten Position,
- Figur 4: eine der Figur 3 entsprechenden Seitenansicht, wobei sich das obere Wippenelement in einer nach vorne unten geneigten Stellung befindet,
- Figur 5: eine Seitenansicht der Verstellvorrichtung ohne zugehörige Wippe in der in Figur 3 gezeichneten Stellung,
- Figur 6: eine der Figur 5 ähnliche Seitenansicht, wobei das Sperrglied und die Zahnschieber in ihrer Freigabe- und Verstellposition gezeichnet sind,
- Figur 7: eine perspektivische Darstellung der Verstellvorrichtung entsprechend Figur 5, wobei die Zahnschieber mit Hilfe des Sperrgliedes mit den Brückenzahriungen der Zahnbrücke kämmend verrastet, d.h. die Verstellvorrichtung in ihrer Sperrstellung gezeichnet sind,
- Figur 8: eine der Figur 7 ähnliche räumliche Darstellung der Verstellvorrichtung, wobei die Zahnschieber außer Eingriff von den Brückenzahnungen der Zahnbrücke sind, d.h. die Verstellvorrichtung - wie in Figur 6 - in ihrer Freigabe- und Verstellposition gezeichnet ist,
- Figur 9: eine Seitenansicht der Verstellvorrichtung in der Sperrstellung - wie in den Figuren 5 und 7 - jedoch von der anderen, d.h. von der Rückseite,
- Figur 10: eine der Figur 9 ähnliche rückseitige Seitenansicht der Verstellvorrichtung in ihrer Freigabe- und Verstellposition - ähnlich wie in den Figuren 6 und 8 - ,
- Figur 11: eine perspektivische teilweise abgeschnittene Darstellung der Verstellvorrichtung in ihrer Sperrstellung,
- Figur 12: eine der Figur 11 entsprechende Darstellung der Verstellvorrichtung in ihrer Freigabe- und Verstellposition,
- Figur 13: eine der Figur 5 ähnliche Seitenansicht der Verstellvorrichtung mit einem modifizierten Sperrorgan in der Sperrstellung,
- Figur 14: eine der Figur 13 entsprechende Seitenansicht der Verstellvorrichtung in ihrer Freigabe- und Verstellposition, und
- Figur 15: eine der Figur 14 entsprechende Freigabe- und Verstellposition auf der der Verstellvorrichtung gemäß Figur 14 gegenüberliegenden anderen Seite eines Fahrzeugsitzes.

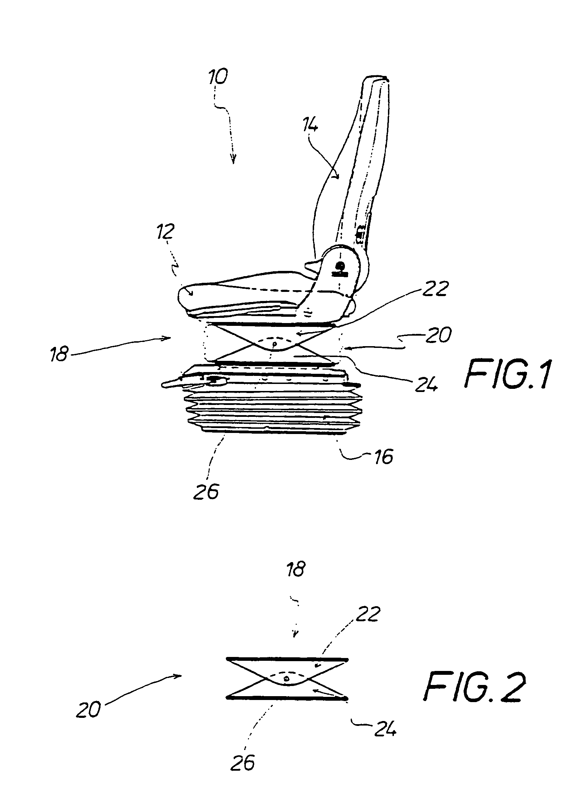

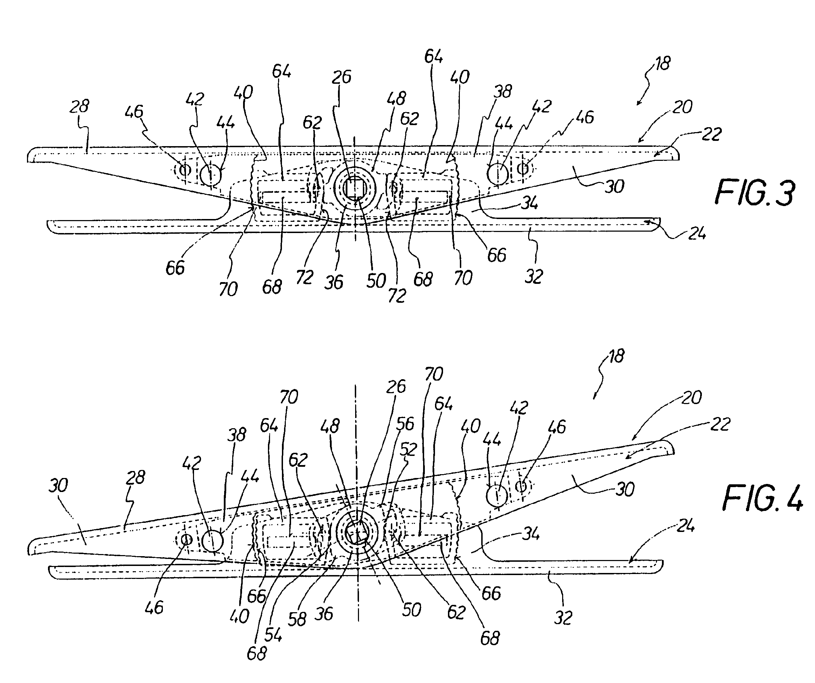

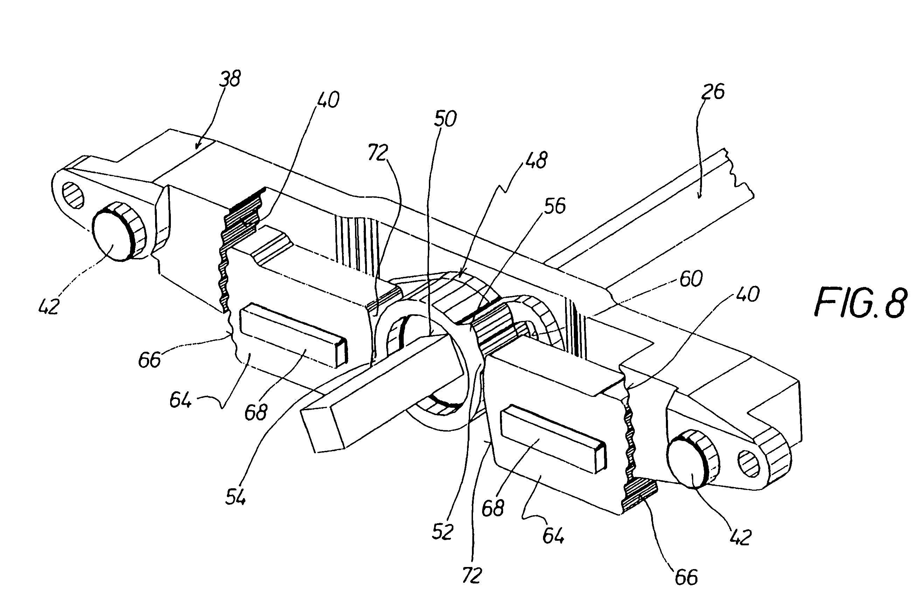

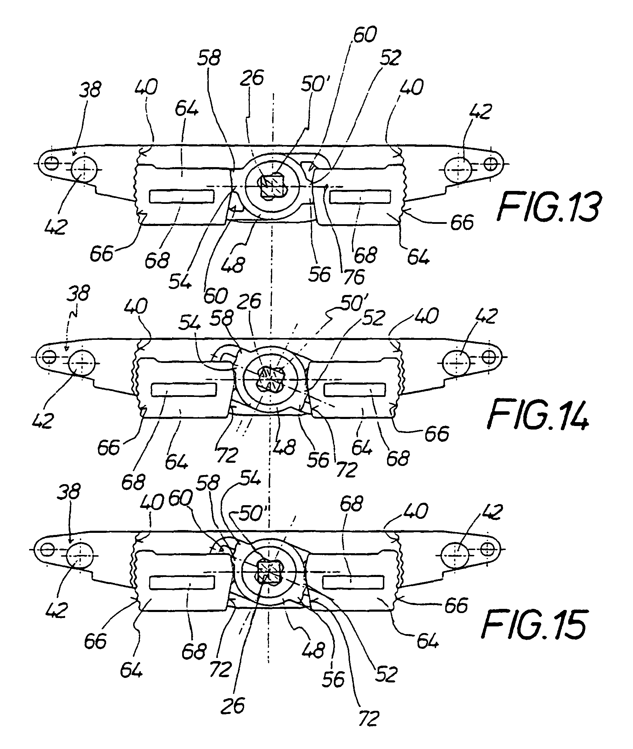

Figur 1 zeigt in einer Seitenansicht einen Fahrzeugsitz 10 mit einer Sitzplatte 12 und einer Rückenlehne 14. Der Fahrzeugsitz 10 ist an einer Sitzfederungseinrichtung 16 angeordnet. Zwischen der Sitzplatte 12 und der Sitzfederungseinrichtung 16 ist eine Verstellvorrichtung 18, im folgenden als Verstelleinrichtung bezeichnet, zum Verstellen der Neigung der Sitzplatte 12 des Fahrzeugsitzes 10 vorgesehen. Die Verstelleinrichtung 18 wird nachfolgend in Verbindung mit den Figuren 3 und 4 bzw. 5 bis 12 sowie in Verbindung mit den Figuren 13 bis 15 detaillierter beschrieben.

In den Figuren 1 und 2 ist die eine Wippe 20 aufweisende Verstelleinrichtung 18 schematisch verdeutlicht. Die Wippe 20 weist ein oberes Wippenelement 22 und ein unteres Wippenelement 24 auf, die miteinander um eine gemeinsame Drehachse 26 gegeneinander verschwenkbar sind, um die Neigung der Sitzplatte 12 des Fahrzeugsitzes 10 wunschgemäß in kleinen Winkelschritten einstellen zu können.

Die Figuren 3 und 4 verdeutlichen die Verstelleinrichtung 18 in einer waagrechten und in einer nach vorne unten geneigten Position des oberen Wippenelementes 22 in Bezug zum unteren Wippenelement 24, die als Blechteile ausgebildet sind. Das obere Wippenelement 22 weist ein Grundflächenteil 28 und zwei voneinander entfernte und vom Grundflächenteil 28 nach unten ragende Schenkelteile 30 auf. Entsprechend weist das untere Wippenelement 24 ein Grundflächenteil 32 und vom Grundflächenteil 32 nach oben stehende Schenkelteile 34 auf. Die Schenkelteile 30 und 34 sind durch Lagerbuchsen 36 miteinander schwenkbeweglich verbunden.

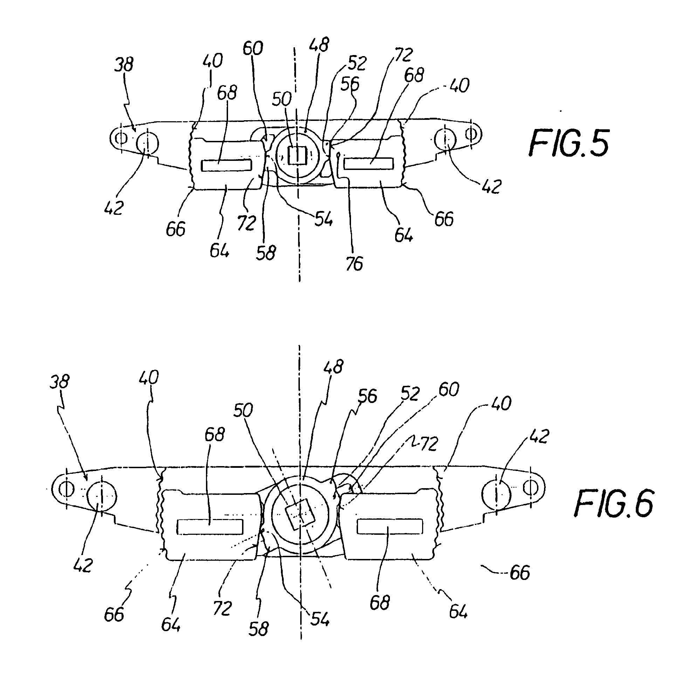

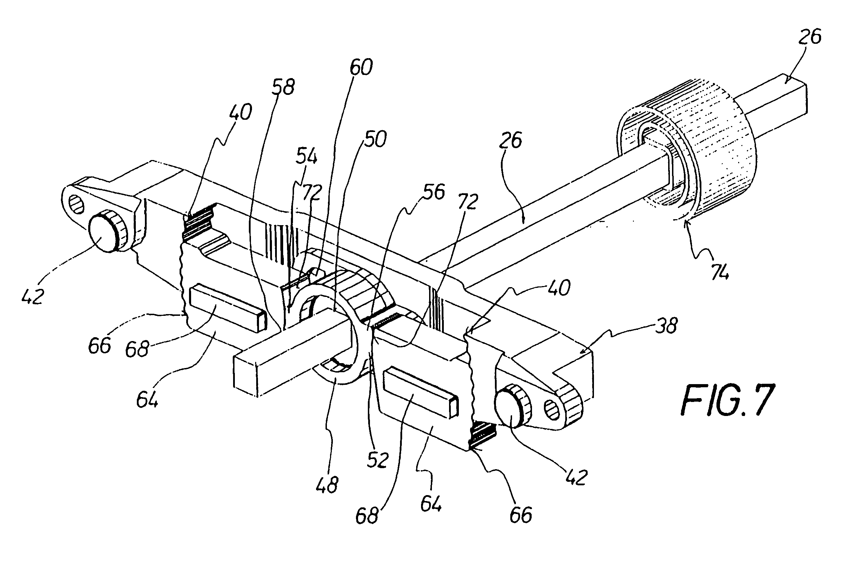

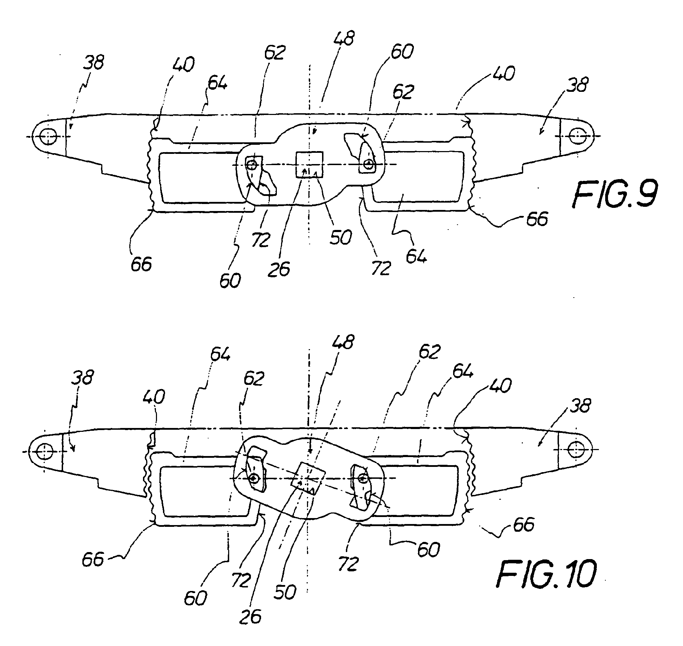

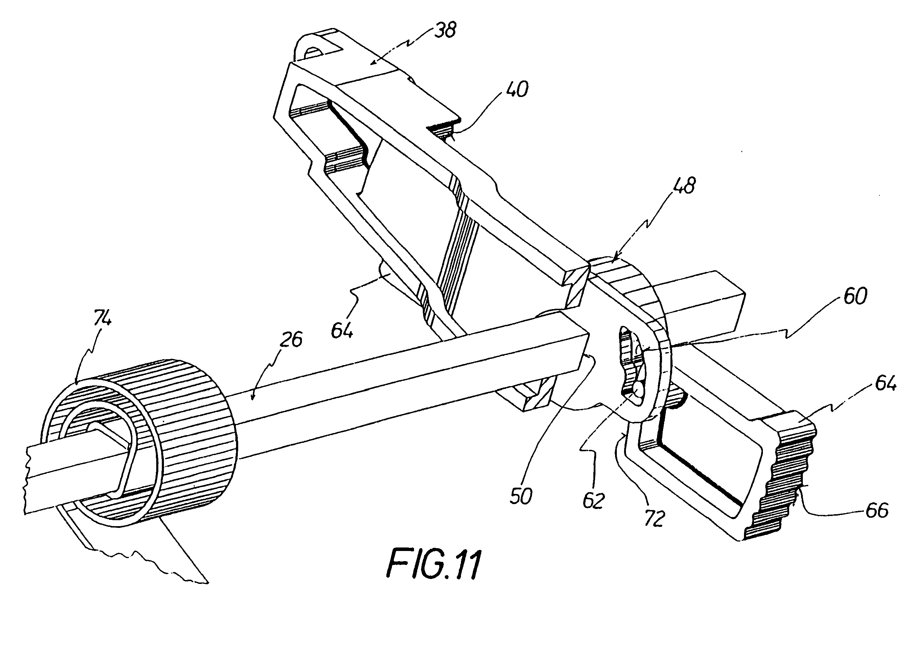

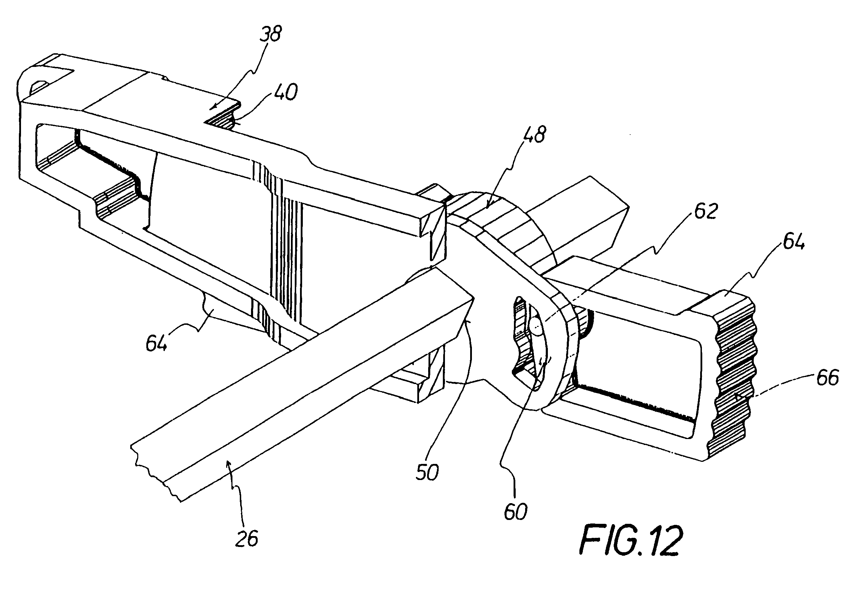

Am oberen Wippenelement 22 ist eine Zahnbrücke 38 fixiert, die in den Figuren 5 bis 8 von der einen Seite, in den Figuren 9 und 10 schematisch von der gegenüberliegenden Seite, in den Figuren 11 und 12 abschnittweise und in den Figuren 13 bis 15 wie in den Figuren 5 und 6 von der einen Seite gesehen dargestellt ist. Die Zahnbrücke 38 ist mit Zahnungen 40 ausgebildet, die in bezug zu der sich verdrehfest durch die Lagerbuchsen 36 erstreckenden Drehachse 26 konzentrisch vorgesehen sind.

Von der Zahnbrücke 38 stehen Zentrierzapfen 42 weg. Das obere Wippenelement 22 ist am entsprechenden Schenkelteil 30 mit Löchern 44 ausgebildet, in welche die Zentrierzapfen 42 spielfrei hineinstehen. Auf diese Weise wird eine genaue Positionierung der Zahnbrücke 38 am oberen Wippenelement 22 erzielt. Die Fixierung der Zahnbrücke 38 am besagten Schenkelteil 30 des oberen Wippenelementes 22 erfolgt mittels von den Zentrierzapfen 42 beabstandeten Befestigungselementen 46, bei welchen es sich z.B. um Nieten handelt.

An der Drehachse 26, die einen von der Kreisform abweichenden Querschnitt, d.h. bei dem in den Zeichnungsfiguren dargestellten Ausführungsbeispiel der Verstelleinrichtung 18 einen quadratischen Querschnitt besitzt, ist ein Sperrglied 48, im folgenden als Sperrorgan bezeichnet, verdrehfest angebracht. Das heißt, das Sperrorgan 48 ist mit einem Durchgangsloch 50 ausgebildet, dessen lichter Querschnitt an den Querschnitt der Drehachse 26 spielfrei angepaßt ist.

Das Sperrorgan 48 ist mit Nasen 52, 54 und 56, 58 ausgebildet - sh. beispielsweise die Figuren 5 und 6 -, die sich diametral gegenüberliegen. Wie aus den Figuren 9 und 10 deutlich ersichtlich ist, ist das Sperrorgan 48 außerdem mit sich diametral gegenüberliegenden Kulissen 60 ausgebildet, an welchen Zapfen 62 anliegen, die von Zahnschiebem 64 wegstehen. Das Sperrorgan 48 ist mittig zwischen den beiden Zahnschiebem 64 vorgesehen. Jeder der beiden Zahnschieber 64 ist mit einer Schieberzahnung 66 ausgebildet. Die Schieberzahnungen 66 und die Zahnungen 40 der Zahnbrücke 38 sind mit einander entsprechenden wellenförmigen Zahnprofilen ausgebildet.

Jeder der beiden Zahnschieber 64 weist einen Führungssteg 68 auf. Das zugehörige Schenkelteil 34 des unteren Wippenelementes 24 ist mit zwei Führungsschlitzen 70 ausgebildet, in welche die Führungsstege 68 der Zahnschieber 64 hineinstehen. Die Führungsschlitze 70 sind länger als die Führungsstege 68. Die Breite der Führungsstege 68 und die Breite der Führungsschlitze 70 sind gleich groß, so daß die Zahnschieber 64 in Bezug zum unteren Wippenelement 24 linear beweglich geführt sind.

Jeder der beiden Zahnschieber 64 ist mit einem dem Sperrorgan 48 zugewandten Rücken 72 ausgebildet, an welchem in der Freigabe- und Verstellposition des Sperrorgans 48 (sh. die Figuren 4, 6, 8, 12, 14 und 15) die Nasen 52 und 54 des Sperrorganes 48 anliegen, und an welchen in der Sperrstellung des Sperrorganes 48 die Nasen 52, 54 und 56, 58 anliegen, wie aus den Figuren 3, 5, 7 und 13 ersichtlich ist.

Zwischen der Drehachse 26 und dem unteren Wippenelement 24 ist ein Federelement 74 vorgesehen, das beispielsweise als Spiralfeder ausgebildet ist. Das Federelement 74 dient dazu, die beiden Zahnschieber 64 mittels des Sperrorganes 48 gegen die Zahnungen 40 der Zahnbrücke 38, d.h. die beiden Zahnschieber 64 in ihre Sperrstellung zu zwängen. Dabei ist das Federelement 74 mechanisch gespannt. Zum Freigeben der Wippe 20 zur Verstellung der Neigung der Sitzplatte 12 des Fahrzeugsitzes 10 wird die Drehachse 26 geeignet verschwenkt, wobei die beiden Zahnschieber 64 durch die formschlüssige Anlage ihrer Zapfen 62 an den Kulissen 60 des Sperrorganes 48 aufeinander zu, d.h. die Schieberzahnungen 66 der beiden Zahnschieber 64 von den Zahnungen 40 der Zahnbrücke 38 freigegeben werden. In dieser Freigabe- und Verstellposition des Sperrorganes 48 und der beiden Zahnschieber 64 kann dann die Sitzplatte 12 und somit der Fahrzeugsitz 10 in seiner Neigung wunschgemäß verstellt werden. Nach Erreichen der gewünschten Neigungsposition wird die Drehachse 26, die zweckmäßigerweise mit einem (nicht gezeichneten) Verstellhebel verbunden ist, losgelassen. Dabei kann sich das mechanisch gespannte Federelement 74, das in der Freigabe- und Verstellposition mechanisch stärker vorgespannt ist, wieder entspannen, um die beiden Zahnschieber 64 über das Sperrorgan 48 wieder mit den Zahnungen 40 der Zahnbrücke 38 in der gewünschten Neigungsstellung zu verrasten.

Die Rücken 72 der beiden Zahnschieber 64 und die Nasen 52, 54 und 56, 58 des Sperrorganes 48 sind aneinander angepaßt derartig ausgebildet, daß die Nasen 52 und 54 in der Sperrstellung der Zahnschieber (sh. Figur 5) in einer geraden Wirklinie 76 liegen, die sich durch die Drehachse 26 zentral hindurcherstreckt und die zu den Führungsschlitzen 70 bzw. den Führungsstegen 68 parallel verläuft oder zu diesen deckungsgleich vorgesehen ist. Hierdurch wird vermieden, daß durch die Wippe 20 in die Zahnbrücke 38 eingeleitete äußere Kräfte, die über die Zahnungen 40 der Zahnbrücke 38 eine Kraftkomponente auf die Schieberzahnungen 66 der beiden Zahnschieber 64 ausüben, die Zahnschieber 64 aus der Sperrstellung herausbewegen können.

Das Sperrorgan 48 ist an der Drehachse 26 mit einem definierten Spiel gelagert und kann somit mögliche Toleranzen beispielsweise an den Zahnungen 40 der Zahnbrücke 38 und/oder an den Schieberzahnungen 66 der beiden Zahnschieber 64 durch ihre spielbedingte Bewegungsfreiheit ausgleichen. Außerdem erfährt das Sperrorgan 48 keine Drehbegrenzung im Drehsinne der Freigabe- und Verstellposition und ist durch die Wirkung des Federelementes 74, d.h. durch die Einwirkung des entsprechenden Federmomentes in der Lage, über die nach außen geschrägten Nasen 54, 56 die gleichfalls angeschrägten Rücken 72 der beiden Zahnschieber 64 nachzustellen. Auf diese Weise wird erreicht, daß auch nach einer langen Betriebsdauer ein eventuell auftretendes Spiel in den Zahnungen 40 und/oder in den Schieberzahnungen 66 eliminiert bzw. zumindest reduziert wird.

Gleiche Einzelheiten sind in den Figuren 1 bis 12 jeweils mit denselben Bezugsziffern bezeichnet, so daß es sich erübrigt, in Verbindung mit allen diesen Figuren alle Einzelheiten jeweils detailliert zu beschreiben.

Kommt eine Zahnbrücke 38 sowohl am rechten als auch am linken Schenkelteil 30 des oberen Wippenelementes 22 der Wippe 20 der Verstelleinrichtung 18 zur Anwendung, so können die beiden Sperrorgane 48 durch eine gemeinsame Drehachse 26 betätigt werden. Dabei kann es unter bestimmten Voraussetzungen wie beispielsweise einer Verwindung der Wippe 20 infolge großer äußerer Kräfte zu einem ungleichmäßigen Einrasten der Zahnschieber 64 auf der linken bzw. rechten Seite kommen. Hierdurch kann es bei einer starren Verbindung der Sperrorgane 48 über die gemeinsame Drehachse 26 zu einem "Darüberrasten" über die vom Sitzbenutzer gewünschte Neigungsposition kommen. Um ein solches "Darüberrasten" über die besagte gewünschte Neigungsposition zu vermeiden, kann wenigstens eines der beiden Sperrorgane 48 mit einem Durchgangsloch 50' ausgebildet sein, dessen lichter Querschnitt an den Querschnitt der Drehachse 26 derartig angepaßt ist, daß eine begrenzte Winkeldrehbewegung der Drehachse 26 relativ zum Sperrorgan 48 möglich ist. In den Figuren 13, 14 und 15 ist eine solche eine begrenzte Winkeldrehbewegung der Drehachse 26 relativ zum Sperrorgan 48 ermöglichende Ausbildung des Durchgangsloches 50' verdeutlicht.

Gleiche Einzelheiten sind auch in den Figuren 13 bis 15 mit denselben Bezugsziffem wie in den Figuren 1 bis 12 bezeichnete, so daß es sich erübrigt, in Verbindung mit den Figuren 13 bis 15 alle diese Einzelheiten noch einmal detailliert zu beschreiben.

## Patentansprüche

1. Vorrichtung zum Verstellen der Neigung einer Sitzplatte (12) eines Fahrzeugsitzes (10),
**dadurch gekennzeichnet,**
**daß** eine Wippe (20) mit einem oberen Wippenelement (22) und mit einem unteren Wippenelement (24) vorgesehen ist, die durch seitliche Lagerbuchsen (36) miteinander schwenkbeweglich verbunden sind, daß an dem oberen Wippenelement (22) eine Zahnbrücke (38) mit sich gegenüberliegenden und zu den Lagerbuchsen (36) konzentrischen Brückenzahnungen (40) fixiert ist, und daß zwischen den beiden Brückenzahnungen (40) der Zahnbrücke (38) zwei Zahnschieber (64) mit voneinander abgewandten Schieberzahnungen (66) und zwischen den beiden Zahnschiebern (64) ein Sperrglied (48) vorgesehen ist, das um eine sich durch die Lagerbuchsen (36) erstreckende Drehachse (26) drehbar ist, wobei die beiden Zahnschieber (64) am unteren Wippenelement (24) zwischen einer in die Brückenzahnungen (40) einrastenden Sperrstellung und einer von den Brückenzahnungen (40) beabstandeten Freigabe- und Verstellposition linear beweglich geführt sind, das Sperrglied (48) zum Verstellen der beiden Zahnschieber (64) zwischen der Freigabe- und Verstellposition und der Sperrstellung vorgesehen ist, und zwischen der Drehachse (26) und dem unteren Wippenelement (24) ein vorgespanntes Federelement (74) vorgesehen ist, das die beiden Zahnschieber (64) selbsthemmend in die Sperrstellung zwängt.

2. Vorrichtung nach Anspruch 1,
**dadurch gekennzeichnet,**
**daß** das obere Wippenelement (22) und das untere Wippenelement (24) als Blechteile ausgebildet sind.

3. Vorrichtung nach Anspruch 1,
**dadurch gekennzeichnet,**
**daß** die Zahnbrücke (38) am oberen Wippenelement (22) durch Zentrierzapfen (42) zentriert und mittels davon beabstandeten Befestigungselementen (46) fixiert ist.

4. Vorrichtung nach Anspruch 1,
**dadurch gekennzeichnet,**
**daß** die Brückenzahnungen (40) der Zahnbrücke (38) und die Schieberzahnungen (66) der Zahnschieber (64) wellenförmige Zahnprofile aufweisen.

5. Vorrichtung nach Anspruch 1,
**dadurch gekennzeichnet,**
**daß** jeder der beiden Zahnschieber (64) einen dem Sperrglied (48) zugewandten Rücken (72) aufweist und daß das Sperrglied (48) mit diametral gegenüberliegenden, an den Rücken (72) anliegenden Nasen (52, 54, 56, 58) ausgebildet ist.

6. Vorrichtung nach Anspruch 1,
**dadurch gekennzeichnet,**
**daß** das untere Wippenelement (24) mit Führungsschlitzen (70) ausgebildet ist, die miteinander in einer Linie fluchten, und daß die beiden Zahnschieber (64) zu ihrer Verstellung zwischen der Sperrstellung und der Freigabe- und Verstellposition mit Führungsstegen (68) ausgebildet sind, die in den Führungsschlitzen (70) linear beweglich geführt sind.

7. Vorrichtung nach Anspruch 5 und 6,
**dadurch gekennzeichnet,**
**daß** die Rücken (72) der Zahnschieber (64) und die Nasen (52, 54, 56, 58) des Sperrgliedes (48) derartig ausgebildet sind, daß die Nasen (52, 54) in der Sperrstellung der Zahnschieber (64) in einer geraden Wirklinie (76) liegen, die sich durch die Drehachse (26) erstreckt und die zu den Führungsschlitzen (70) parallel verläuft oder zu diesen deckungsgleich vorgesehen ist.

8. Vorrichtung nach Anspruch 1,
**dadurch gekennzeichnet,**
**daß** von jedem der beiden Zahnschieber (64) jeweils ein Zapfen (62) wegsteht, und
**daß** das Sperrglied (48) mit sich diametral gegenüberliegenden Kulissen (60) ausgebildet ist, mittels welchen die beiden Zahnschieber (64) bei einer Freigabeverstellung des Sperrgliedes (48) durch die Zapfen (62) gegen die Kraft des Federelementes (74) von der Sperrstellung in die Freigabe- und Verstellposition verstellbar sind.

9. Vorrichtung nach Anspruch 1,
**dadurch gekennzeichnet,**
**daß** die Drehachse (26) einen von der Kreisform abweichenden Querschnitt aufweist.

10. Vorrichtung nach einem der Ansprüche 1 bis 9,
**dadurch gekennzeichnet,**
**daß** das Sperrglied (48) ein Durchgangsloch (50) aufweist, dessen lichter Querschnitt an den Querschnitt der Drehachse (26) angepaßt ist.

11. Vorrichtung nach einem der Ansprüche 1 bis 9,
**dadurch gekennzeichnet,**
**daß** das Sperrglied (48) ein Durchgangsloch (50') aufweist, dessen lichter Querschnitt an den Querschnitt der Drehachse (26) derartig angepaßt ist, daß eine begrenzte Winkeldrehbewegung der Drehachse (26) relativ zum Sperrglied (48) möglich ist.

## Claims

1. Apparatus for adjusting the inclination of a seat plate (12) of a vehicle seat (10), **characterized in that** a rocker (20) is provided with an upper rocker element (22) and with a lower rocker element (24) which are connected to one another by lateral bearing bushes (36) in a pivotably movable manner, **in that** a tooth bridge (38) having bridge toothing systems (40) which lie opposite one another and are concentric with respect to the bearing bushes (36) is fixed on the upper rocker element (22), and **in that** two tooth slides (64) having slide toothing systems (66) which face away from one another are provided between the two bridge toothing systems (40) of the tooth bridge (38) and a locking member (48) is provided between the two tooth slides (64), which locking member (48) can be rotated about a rotational axle (26) which extends through the bearing bushes (36), the two tooth slides (64) being guided in a linearly movable manner on the lower rocker element (24) between a locking position which latches into the bridge toothing systems (40) and a release and adjustment position which is spaced apart from the bridge toothing systems (40), the locking member (48) being provided for adjusting the two tooth slides (64) between the release and adjustment position and the locking position, and a prestressed spring element (74) being provided between the rotational axle (26) and the lower rocker element (24), which prestressed spring element (74) forces the two tooth slides (64) into the locking position in a self-locking manner.

2. Apparatus according to Claim 1, **characterized in that** the upper rocker element (22) and the lower rocker element (24) are configured as sheet-metal parts.

3. Apparatus according to Claim 1, **characterized in that** the tooth bridge (38) is centred on the upper rocker element (22) by centring pins (42) and is fixed by fastening elements (46) which are spaced apart from the said centring pins (42).

4. Apparatus according to Claim 1, **characterized in that** the bridge toothing systems (40) of the tooth bridge (38) and the slide toothing systems (66) of the tooth slides (64) have undulating tooth profiles.

5. Apparatus according to Claim 1, **characterized in that** each of the two tooth slides (64) has a back (72) which faces the locking member (48), and **in that** the locking member (48) is formed with lugs (52, 54, 56, 58) which lie diametrically opposite one another and bear against the back (72).

6. Apparatus according to Claim 1, **characterized in that** the lower rocker element (24) is configured with guide slots (70) which are aligned with one another in one line, and **in that** the two tooth slides (64) are configured with guide webs (68) for their adjustment between the locking position and the release and adjustment position, which guide webs (68) are guided in the guide slots (70) in a linearly movable manner.

7. Apparatus according to Claims 5 and 6, **characterized in that** the backs (72) of the tooth slides (64) and the lugs (52, 54, 56, 58) of the locking member (48) are configured in such a way that, in the locking position of the tooth slides (64), the lugs (52, 54) lie in a straight line of action (76) which extends through the rotational axle (26) and runs parallel to the guide slots (70) or is provided so as to be congruent with the latter.

8. Apparatus according to Claim 1, **characterized in that** in each case one pin (62) protrudes from each of the two tooth slides (64), and **in that** the locking member (48) is configured with slotted guides (60) which lie diametrically opposite one another and by means of which the two tooth slides (64) can be adjusted by the pins (62) counter to the force of the spring element (74) from the locking position into the release and adjustment position if the locking member (48) is released.

9. Apparatus according to Claim 1, **characterized in that** the rotational axle (26) has a cross section which deviates from the circular shape.

10. Apparatus according to one of Claims 1 to 9, **characterized in that** the locking member (48) has a through hole (50), the inside cross section of which is adapted to the cross section of the rotational axle (26).

11. Apparatus according to one of Claims 1 to 9, **characterized in that** the locking member (48) has a through hole (50'), the inside cross section of which is adapted to the cross section of the rotational axle (26) in such a way that a limited angular rotational movement of the rotational axle (26) is possible relative to the locking member (48).

## Revendications

1. Dispositif de réglage de l'inclinaison de la partie d'assise (12) d'un siège de véhicule (10),
**caractérisé en ce qu'**est prévue une bascule (20) avec un élément à bascule supérieur (22) et un élément à bascule inférieur (24), lesquels sont rattachés l'un à l'autre par des coussinets latéraux (36) de paliers assurant un mouvement oscillant, **en ce qu'**un pont denté (38) avec des dentures (40) se faisant face et concentriques par rapport aux coussinets (36) est fixé sur l'élément à bascule supérieur (22), et **en ce que** deux coulisseaux dentés (64) avec des dentures (66) orientées dans des directions opposées sont prévues entre les deux dentures (40) du pont denté (38) et un élément de blocage (48) tournant autour d'un axe de rotation (26) s'étendant à travers les coussinets (36) est prévu entre les deux coulisseaux dentés (64), les deux coulisseaux dentés (64) sur l'élément à bascule inférieur (24) étant guidés de façon linéaire et mobile entre une position de blocage s'enclenchant dans les dentures(40) et une position de déblocage et de réglage espacée des dentures (40), l'élément de blocage (48) permettant de régler les deux coulisseaux dentés (64) étant prévu entre la position de déblocage et de réglage et la position de blocage, et un élément élastique (74) précontraint qui bloque automatiquement les deux coulisseaux dentés (64) en position de blocage étant prévu entre l'axe de rotation (26) et l'élément à bascule inférieur (24).

2. Dispositif selon la revendication 1,
**caractérisé en ce que** l'élément à bascule supérieur (22) et l'élément à bascule inférieur (24) sont conçus sous forme de pièces en tôle.

3. Dispositif selon la revendication 1,
**caractérisé en ce que** le pont denté (38) sur l'élément à bascule supérieur (22) est centré par l'intermédiaire de tourillons de centrage (42) et est fixé à l'aide d'éléments de fixation (46) espacés des tourillons.

4. Dispositif selon la revendication 1,
**caractérisé en ce que** les dentures (40) du pont denté (38) et les dentures (66) des coulisseaux dentés (64) présentent des profils dentés ondulés.

5. Dispositif selon la revendication 1,
**caractérisé en ce que** chacun des deux coulisseaux dentés (64) présente une face (72) orientée en direction de l'élément de blocage (48) et **en ce que** l'élément de blocage (48) est conçu avec des taquets (52, 54, 56, 58) diamétralement opposés, prenant appui sur les faces (72).

6. Dispositif selon la revendication 1,
**caractérisé en ce que** l'élément à bascule inférieur (24) est conçu avec des fentes de guidage (70), alignées les unes avec les autres, et **en ce que** les deux coulisseaux dentés (64), pour leur réglage entre la position de blocage et la position de déblocage et de réglage, sont conçus avec des entretoises de positionnement (68) qui sont guidées dans les fentes de guidage (70) de façon linéaire et mobile.

7. Dispositif selon les revendications 5 et 6,
**caractérisé en ce que** les faces (72) des coulisseaux dentés (64) et les taquets (52, 54, 56, 58) de l'élément de blocage (48) sont conçus de telle sorte que les taquets (52, 54), dans la position de blocage des coulisseaux dentés (64), se trouvent sur une ligne primitive droite (76) qui s'étend à travers l'axe de rotation (26) et qui est parallèle aux fentes de guidage (70) ou est prévue de façon coïncidente par rapport à celles-ci.

8. Dispositif selon la revendication 1,
**caractérisé en ce qu'**un tourillon (62) fait saillie de chacun des deux coulisseaux dentés (64), et **en ce que** l'élément de blocage (48) est conçu avec des coulisses (60) diamétralement opposées, à l'aide desquelles les deux coulisseaux dentés (64), lors d'un déblocage de l'élément de blocage (48), peuvent être amenés par les tourillons (62) de la position de blocage dans la position de déblocage et de réglage, en s'opposant à la force de l'élément élastique (74).

9. Dispositif selon la revendication 1,
**caractérisé en ce que** l'axe de rotation (26) présente une section s'écartant de la forme circulaire.

10. Dispositif selon la revendication 1,
**caractérisé en ce que** l'élément de blocage (48) présente un orifice de passage (50) dont la dimension intérieure est adaptée à la section de l'axe de rotation (26).

11. Dispositif selon l'une des revendications 1 à 9,
**caractérisé en ce que** l'élément de blocage (48) présente un orifice de passage (50) dont la dimension intérieure est adaptée à la section de l'axe de rotation (26) de telle manière qu'un mouvement rotatif angulaire limité de l'axe de rotation (26) par rapport à l'élément de blocage (48) est possible.
